# EUROPEAN PATENT APPLICATION

(11) **EP 4 283 379 A1**
(43) Date of publication of application: **29.11.2023**
(21) Application number: 23173709.9
(22) Date of filing: 16.05.2023
(51) Int. Cl.: G02B 27/01

(54) **HEAD-MOUNTED DISPLAY DEVICE AND DISPLAY METHOD FOR HEAD-MOUNTED DISPLAY**

(30) Priority: 23.05.2022 JP 2022083570
(71) Applicant: Funai Electric Co., Ltd., Daito, Osaka, 574-0013 (JP)
(72) Inventor: TAKEMOTO, Seiji, Daito-shi, Osaka, 574-0013 (JP)
(74) Representative: Global IP Europe Patentanwaltskanzlei

(57) **Abstract**

A head-mounted display device comprises a display unit configured to display an image, a projection unit including a lens that is configured to project a virtual image of the image so as to overlap part of a field of view of a user, an imaging unit configured to image an eye of the user, a projection distance adjustment unit configured to adjust a projection distance of the virtual image, which is a distance from the eye to the virtual image seen by the user, and a control unit configured to acquire a first distance between a pupil and a lower eyelid of the eye imaged by the imaging unit, and configured to control the projection distance adjustment unit such that the projection distance of the virtual image corresponds to the first distance.

## Description

### CROSS-REFERENCE TO RELATED APPLICATIONS

This application claims priority to Japanese Patent Application No. 2022-83570 filed in Japan on May 23, 2022.

### BACKGROUND

### Field of the Invention

The present invention generally relates to a head-mounted display device. More specifically, the present invention relates to a head-mounted display device that is worn on the head of a user during movement by a mobile body, and that comprises a housing, a display unit, and a control unit, and to a display method for a head-mounted display.

### Background Information

There are conventional head-mounted display devices that are worn on the head of a user during movement by a mobile body and that comprise a housing, a display unit, and a control unit (see, JP 2009-92810 A (Patent Literature 1), for example).

The head-mounted display device described in Patent Literature 1 is a see-through type of head-mounted display device that is disposed in front of the user's eyes and comprises an optical system that guides to the user's eyes an image displayed by a display element, which is superimposed on the background of the user's field of view. This head-mounted display device is used when riding a motorcycle, etc. The display element of this head-mounted display device displays images indicating the traveling speed of the two-wheeled vehicle or other such information, or information such as the shape and type of the road or the current position of the traveling vehicle from a navigation system. With this head-mounted display device, a light beam emitted from the display element and incident inside a prism is guided to a half-mirror, is reflected by the half-mirror, and reaches the user's eyes as a virtual image of the displayed image. External light incident from ahead of the user passes through the half-mirror and the prism, and reaches the user's eyes together with the display light from the display element. Also, the prism and the half-mirror can be set so that external light incident from ahead of the driver can be sufficiently transmitted, and the virtual image of the displayed image will be positioned at a specific distance from the driver's eyes.

### SUMMARY

With the head-mounted display device described in Patent Literature 1, in which both the image displayed by the display element and the background of the field of view of the user can be seen, the position of the virtual image of the display image is set to be a specific distance away from the eyes regardless of the distance from the eyes to an object seen by the user (hereinafter referred to as the "gaze distance"). It takes some time for the human eye to focus on an object when viewing objects with greatly different gaze distances (when changing the gaze from a near position to a far position, or when changing the gaze from a far position to a near position). Therefore, when the gaze target is changed from an object in the field of view to the virtual image of the displayed image, if the gaze distance changes greatly, there will be a problem in that it takes time for the user to adjust the focal point.

One object of this application to provide a head-mounted display device with which it takes less time to adjust the user's focal point when the user's gaze target is changed from an object within the field of view to a virtual image of a display image, as well as a display method for a head-mounted display.
(1) In view of the state of the known technology, a head-mounted display device according to a first aspect of this application comprises: a display unit configured to display an image; a projection unit including a lens that is configured to project a virtual image of the image so as to overlap part of a field of view of a user of the head-mounted display device; an imaging unit configured to image an eye of the user; a projection distance adjustment unit configured to adjust a projection distance of the virtual image, which is a distance from the eye to the virtual image seen by the user; and a control unit configured to acquire a first distance between a pupil and a lower eyelid of the eye imaged by the imaging unit, and configured to control the projection distance adjustment unit such that the projection distance of the virtual image corresponds to the first distance.
   As described above, the head-mounted display device according to the first aspect of this application is configured such that an imaging unit is provided for capturing an image of the user's eye, a first distance between the pupil and the lower eyelid of the eye captured by the imaging unit is acquired, and the projection distance adjustment unit is controlled so that the projection distance will correspond to the acquired first distance. Consequently, because the distance between the user's pupil and the lower eyelid is acquired from the captured image of the eye, the position of the user's pupil in the vertical direction is known, so it can be estimated what the user is looking at. Also, the control unit adjusts the projection distance of the virtual image of the display image to the gaze distance, which is the distance to an object seen by the user. Consequently, a virtual image of the display image is projected at the gaze distance of the user. Accordingly, even if the user's gaze target is greatly changed, the position of the virtual image of the display image will be adjusted to the gaze distance of the user based on the change of the user's gaze target. Therefore, it is possible to provide a head-mounted display device with which it takes less time to adjust the user's focal point when the user's gaze target is changed to the virtual image of the display image.
(2) In accordance with a preferred embodiment according to the head-mounted display device mentioned above, the control unit is configured to control the projection distance adjustment unit so as to increase the projection distance of the virtual image as the first distance increases. With this configuration, when the first distance, which is the distance between the user's pupil and lower eyelid, is large, it can be assumed that the user's gaze distance is far, so the projection distance of the virtual image of the display image can be increased, which means that the user's focal point adjustment time can be shortened even if the user's gaze target is changed to the virtual image of the display image.
(3) In accordance with a preferred embodiment according to any one of the head-mounted display devices mentioned above, the control unit is configured to control the projection distance adjustment unit so as to adjust the projection distance of the virtual image to substantially coincide with a second distance, which is a distance from the eye to an object seen by the user and is estimated based on the first distance. With this configuration, because the distance between the user's pupil and the lower eyelid is acquired, the position of the user's pupil is known, so it can be assumed what the user is looking at. Consequently, the control unit can acquire or estimate the user's gaze distance, which is the distance from the user's eye to an object seen by the user, adjust the projection distance of the projection distance adjustment unit, and perform control so that the user's gaze distance substantially coincides with the projection distance to the virtual image. Therefore, since the user's gaze distance and the virtual image of the display image substantially coincide, there is no need to adjust the user's focal point, which means that the time it would have taken to adjust the user's focal point can be saved.
(4) In accordance with a preferred embodiment according to any one of the head-mounted display devices mentioned above, the control unit is configured to control the projection distance adjustment unit so as to adjust the projection distance of the virtual image to substantially coincide with the second distance when the first distance is less than a specific distance, and configured to control the projection distance adjustment unit so as to adjust the projection distance of the virtual image to infinity, or to fix the projection distance of the virtual image at a specific upper limit distance, when the first distance is greater than the specific distance. With this configuration, when the gaze distance of the user is less than the specific distance, the projection distance is changed so that the position of the virtual image substantially coincides with the gaze distance of the user. Therefore, because the position of the virtual image of the display image is aligned with the user's gaze distance up to a specific distance, even if the user's gaze target is changed to the virtual image of the projected display image, no time will be wasted in adjusting the user's focal point. Also, when the first distance is larger than the specific distance, regardless of the gaze distance, by adjusting the projection distance to infinity or to an upper limit distance, the time it takes to adjust the user's focal point with respect to the virtual image of the displayed image can be shortened.
(5) In accordance with a preferred embodiment according to any one of the head-mounted display devices mentioned above, the display unit is configured to display a navigation information image including information about a movement route of a mobile body accompanying movement by the mobile body. The mobile body is any entity which is configured to transport the user. With this configuration, in a state in which the user is wearing the head-mounted display device, when the user is operating an automobile, a motorcycle, or the like, it will take less time to adjust the user's focal point on the navigation information image projected at the user's gaze distance.
(6) In accordance with a preferred embodiment according to any one of the head-mounted display devices mentioned above, the control unit is configured to perform control to adjust a display brightness of the display unit based on both a size of the pupil and a size of an iris of the eye imaged by the imaging unit. With this configuration, it is possible to estimate the peripheral brightness, which is the brightness of the surrounding area perceived by the user, from the size of the pupil. Therefore, when there is a change in peripheral brightness, the brightness of the virtual image projected at the user's gaze distance can be adjusted, which allows the user to check the virtual image projected at the user's gaze distance at a brightness that is easy for the user to see.
(7) In accordance with a preferred embodiment according to any one of the head-mounted display devices mentioned above, the head-mounted display device further comprises a storage unit configured to store a table in which brightness setting values for the virtual image are associated with pupil diameters.
(8) In accordance with a preferred embodiment according to any one of the head-mounted display devices mentioned above, the control unit is configured to acquire a pupil diameter of the eye based on a ratio between the size of the pupil and the size of the iris of the eye imaged by the imaging unit.
(9) In accordance with a preferred embodiment according to any one of the head-mounted display devices mentioned above, the control unit is configured to adjust the display brightness of the display unit based on a brightness setting value for the virtual image determined based on the pupil diameter of the eye and the table stored by the storage unit.
(10) In accordance with a preferred embodiment according to any one of the head-mounted display devices mentioned above, the projection distance adjustment unit is configured to adjust the projection distance of the virtual image by moving the display unit or the lens. With this configuration, the projection distance adjustment unit can perform control to substantially match the projection distance of the virtual image to the user's gaze distance by moving the display unit or the lens. Therefore, when the user's gaze target is changed to the virtual image of the display image, it will take less time to adjust the user's focal point.
(11) In accordance with a preferred embodiment according to any one of the head-mounted display devices mentioned above, the projection distance adjustment unit includes an electronic actuator to move the display unit or the lens along an optical axis of the display unit or the lens.
(12) In accordance with a preferred embodiment according to any one of the head-mounted display devices mentioned above, the control unit is configured to control the projection distance adjustment unit to move the display unit or the lens by a drive amount determined based on a relation between drive amounts of the display unit or the lens and projection distances of the virtual image.
(13) In accordance with a preferred embodiment according to any one of the head-mounted display devices mentioned above, the head-mounted display device further comprises a housing in which the display unit, the projection unit, the imaging unit, the projection distance adjustment unit and the control unit are at least partially housed.
(14) In accordance with a preferred embodiment according to any one of the head-mounted display devices mentioned above, the housing is attachable to a helmet for the user.
(15) In view of the state of the known technology, a display method for any one of the head-mounted displays mentioned above according to a second aspect of the present application comprises displaying an image on a display unit; projecting a virtual image of the image from a projection unit so as to overlap part of a field of view of the user of the head-mounted display device; acquiring a first distance between a pupil and a lower eyelid of an eye of the user by imaging the eye of the user; and adjusting a projection distance so as to correspond to the first distance.
   With the display method for a head-mounted display according to the second aspect, as described above, a step is providing for acquiring the first distance between the pupil and the lower eyelid by imaging the user's eye, and adjusting the projection distance so as to correspond to the acquired first distance. Consequently, just as in the first aspect, it is possible to shorten the time it takes to adjust the user's focal point when the user's gaze target is changed to the virtual image of the display image.
(16) In accordance with a preferred embodiment according to any one of the head-mounted display devices mentioned above, the head-mounted display device further comprises a storage unit configured to store a table in which projection distances of the virtual image are associated with first distances.
(17) In accordance with a preferred embodiment according to any one of the head-mounted display devices mentioned above, the control unit is configured to acquire the first distance and configured to control the projection distance adjustment unit to change the projection distance of the virtual image based on the first distance and the table stored by the storage unit.
(18) In accordance with a preferred embodiment according to any one of the head-mounted display devices mentioned above, the control unit is configured to control the projection distance adjustment unit so as to increase the projection distance of the virtual image as the first distance increases when the first distance is smaller than a specific distance, and the control unit is configured to control the projection distance adjustment unit so as to decrease the projection distance of the virtual image as the first distance increases when the first distance is greater than the specific distance.
(19) In accordance with a preferred embodiment according to any one of the head-mounted display devices mentioned above, the control unit is configured to control the projection distance adjustment unit so as to increase the projection distance of the virtual image as the first distance increases when the first distance is smaller than a specific distance, and the control unit is configured to control the projection distance adjustment unit so as to maintain the projection distance of the virtual image when the first distance is greater than the specific distance.
(20) In accordance with a preferred embodiment according to any one of the head-mounted display devices mentioned above, the imaging unit includes an image sensor.

With the present application, there are provided a head-mounted display device and a display method for a head-mounted display with which it takes less time to adjust the user's focal point when the user's gaze target is changed from an object within the field of view to a virtual image of the displayed image.

### BRIEF DESCRIPTION OF THE DRAWINGS

Fig. 1 is a block diagram showing the overall configuration of a head-mounted display device according to an embodiment;
Fig. 2 is a schematic diagram showing a usage mode and a display mode of the head-mounted display device according to this embodiment;
Fig. 3 is a simplified diagram of an HMD lens according to this embodiment;
Fig. 4 is a simplified diagram of an infrared CCD according to this embodiment;
Fig. 5 is a diagram showing a user's gaze distance and a projection distance of a virtual image according to this embodiment;
Fig. 6 is a side view of a projection distance adjustment unit according to this embodiment;
Fig. 7 is a graph of the projection distance of the virtual image with respect to a lens drive amount;
Fig. 8 is a diagram of an eye, showing the MRD-2 value;
Fig. 9 is a graph of the MRD-2 value with respect to a viewing angle;
Fig. 10 is a graph of the projection distance of the virtual image with respect to the MRD-2 value;
Fig. 11 is a graph of a focal adjustment time with respect to a viewing distance;
Fig. 12 is a graph of the projection distance of the virtual image with respect to the MRD-2 value at each eye point;
Fig. 13 is a diagram of an eye showing pupil size and iris size;
Fig. 14 is a graph of pupil diameter with respect to a display brightness;
Fig. 15 is a flowchart showing a display method for a head-mounted display;
Fig. 16 is a graph of a modification example of the projection distance of the virtual image with respect to the MRD-2 value; and
Fig. 17 is a graph of a modification example of the projection distance of the virtual image with respect to the MRD-2 value.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims.

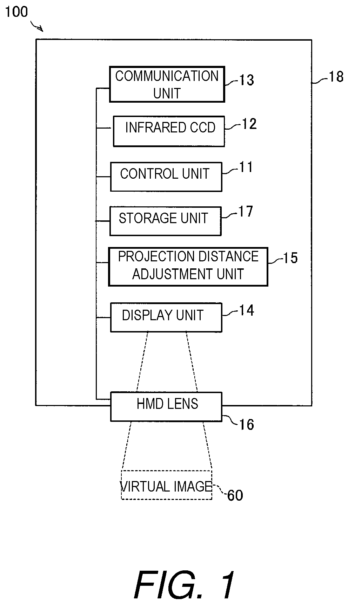

The configuration of a head-mounted display device (hereinafter referred to as "HMD device") 100 according to this embodiment will be described with reference to Figs. 1 to 14.

### (HMD Device)

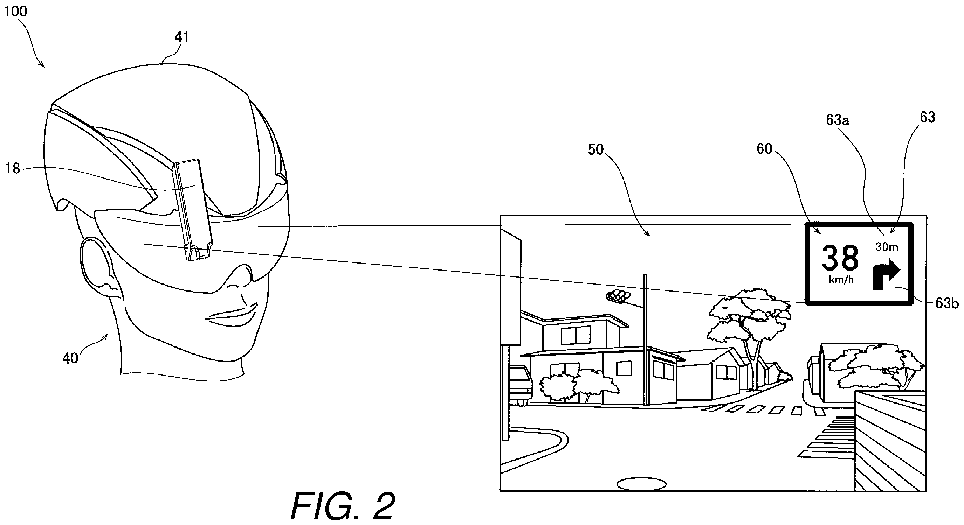

As shown in Fig. 1, the HMD device 100 includes a housing 18 (see also Fig. 2), a display unit 14, a communication unit 13, a control unit 11, a storage unit 17, a projection distance adjustment unit 15, an HMD lens 16, and an infrared CCD (charge coupled device) 12. The display unit 14 is configured to display an image. The display unit 14 includes a display that is configured to display an image. The display unit 14 is, for example, a liquid crystal panel, an organic electroluminescence panel, or the like. The communication unit 13 is configured to allow communication with a mobile terminal or the like. The communication unit 13 includes a communication circuit or communicator. The communication unit 13 includes a wireless communication circuit or wireless communicator that is configured to perform wireless communication with a mobile terminal or the like by Bluetooth (registered trademark) communication, for example. The infrared CCD 12 is an example of the "imaging unit" of the present application, and the HMD lens 16 is an example of the "projection unit" of the present application. The imaging unit includes an image sensor that captures an image, such as the infrared CCD 12. The projection unit includes a projector or optical component, such as the HMD lens 16. The control unit 11 includes an electronic controller or processor. In particular, the control unit 11 includes a CPU (central processing unit), a ROM (read only memory), a RAM (random access memory), and so on. The control unit 11 can also include other conventional components such as an input interface circuit and an output interface circuit. It will be apparent to those skilled in the art from this disclosure that the precise structure and algorithms can be any combination of hardware and software that will carry out the functions of the present invention. Here, the term "electronic controller" as used herein refers to hardware that executes a software program, and does not include a human.

### (Image Information)

As shown in Fig. 2, the HMD device 100 is attached and fixed to a helmet 41 worn by a user 40. In particular, the housing 18 of the HMD device 100 is detachably attached to the helmet 41. As seen in Fig. 1, the housing 18 at least partially houses and supports the control unit 11, the infrared CCD 12, the communication unit 13, the display unit 14, the projection distance adjustment unit 15, the HMD lens 16, and the storage unit 17. When the user 40 puts on the HMD device 100, the user 40 can see the scenery 50 in the field of vision or view, and can also see a virtual image 60 displayed in a part of the scenery 50. In the example shown in Fig. 2, the virtual image 60 is displayed at the upper right of the scenery 50. Also, the display unit 14 is configured to display a navigation information image 63 (see Fig. 2) that includes information about the movement route of the mobile body accompanying movement of the mobile body. Also, a distance 63a to the next branch point where the travel direction 63b will be changed, and the travel direction 63b at the branch point are displayed as the navigation information image 63, for example.

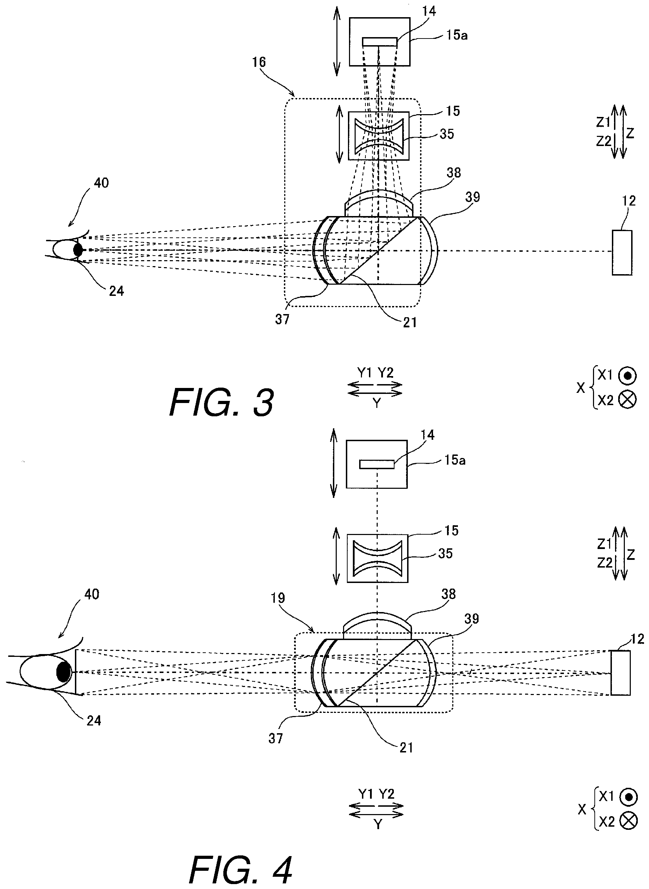

As shown in Fig. 3, the HMD lens 16 is configured to include lenses 35, 37, and 38 and a dichroic mirror 21, and is designed to form the virtual image 60 at a specific position. More precisely, the HMD lens 16 includes a lens 35 that projects the image displayed on the display unit 14 as a virtual image 60 (see Fig. 2) so as to overlap a part of the field of view of the user 40.

As shown in Fig. 4, the infrared CCD 12 is designed to image an eye 24 of the user 40 through a CCD lens 19. The CCD lens 19 is configured to include a condenser lens 39, a lens 37, and a dichroic mirror 21. The lens 37 and the dichroic mirror 21 serve as elements of both the HMD lens 16 and the CCD lens 19. Thus, the elements (i.e., the lens 37 and the dichroic mirror 21) reflect the light from the display unit 14 to the user 40 to project the virtual image 60 and pass through the light from the eye 24 of the user 40 to the infrared CCD 12. With this configuration, the housing 18 is attachable to the helmet 41 such that the eye 24 of the user 40 and the infrared CCD 12 are opposite to each other via the dichroic mirror 21.

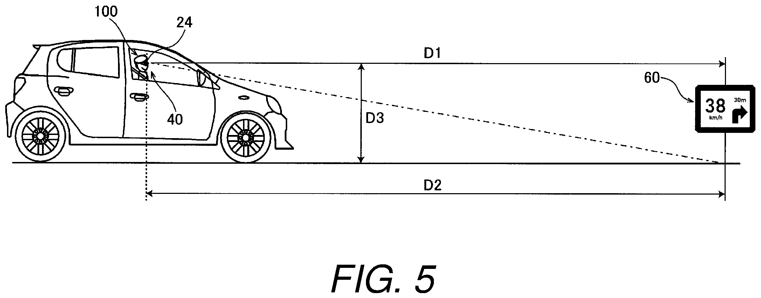

The projection distance adjustment unit 15 is configured to adjust a projection distance D1 (see Fig. 5), which is the distance from the eye 24 to the virtual image 60 seen by the user 40. Also, as shown in Fig. 5, a gaze distance D2 is the distance from the eye 24 to an object seen by the user 40. The gaze distance D2 is an example of the "second distance" in the present application. The projection distance adjustment unit 15 includes a projection distance adjuster or adjustment mechanism.

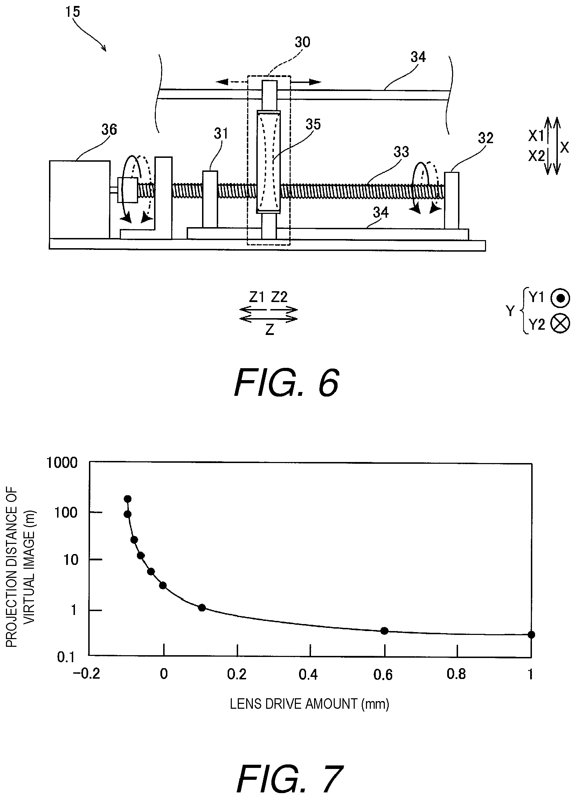

As shown in Fig. 6, the projection distance adjustment unit 15 adjusts the projection distance D1 of the virtual image 60 by moving the display unit 14 or the lens 35. In this embodiment, a configuration will be described in which the projection distance adjustment unit 15 moves the lens 35. The projection distance adjustment unit 15 includes an electronic actuator, such as a stepping motor 36, and a ball screw 33 that is coupled to the stepping motor 36. The ball screw 33 is supported by a bearing 31 and a bearing 32. Also, as shown in Fig. 6, the lens 35 shown in Fig. 3 is installed on a moving frame 30. The ball screw 33 is inserted into the moving frame 30, and the moving frame 30 is supported by two guide shafts 34. Consequently, the stepping motor 36 rotates the ball screw 33 and moves the moving frame 30 in the Z axis direction. This movement of the moving frame 30 causes the lens 35 to move in the Z axis direction. As shown in Fig. 3, the Z axis direction is the optical axis direction between the display unit 14 and the eye 24 of the user 40.

As shown in Fig. 1, the control unit 11 is configured to control the projection distance adjustment unit 15. More specifically, the control unit 11 controls the projection distance adjustment unit 15 so that the projection distance D1 corresponds to the MRD (margin reflex distance)-2 value D4. The relation between the drive amount of the lens 35 and the projection distance D1 of the virtual image 60 is shown in Fig. 7. The MRD-2 value D4 is an example of the "first distance" in the present application. In the illustrated embodiment, the control unit 11 controls the projection distance adjustment unit 15 to drive the lens 35 by a drive amount to achieve a desired projection distance D1 of the virtual image 60 based on the relation shown in Fig. 7. This relation can be stored in the storage unit 17 as a table in which projection distances D1 are associated with drive amounts of the lens 35. Of course, when the display unit 14 is moved to adjust the projection distance D1, the control unit 11 controls the projection distance adjustment unit 15 to drive the display unit 14 by a drive amount to achieve a desired projection distance D1 of the virtual image 60 based on a relation stored in the storage unit 17 as a table in which projection distances D1 are associated with drive amounts of the display unit 14.

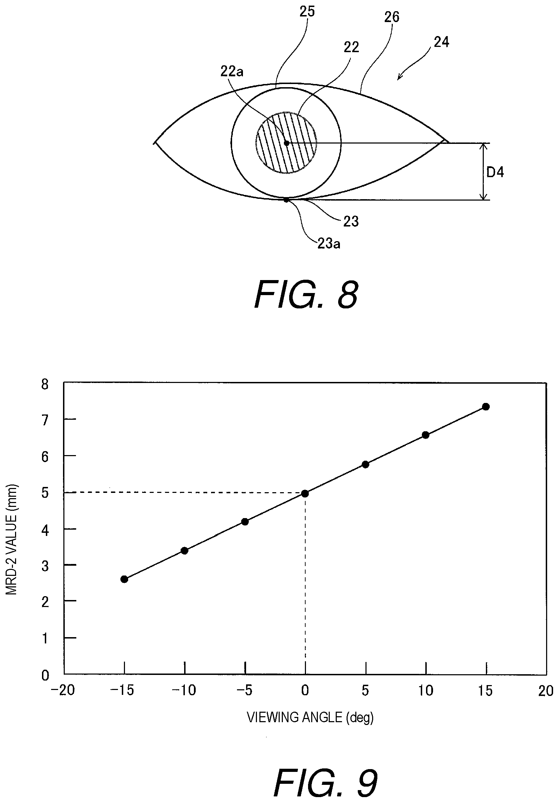

The control unit 11 uses edge detection to acquire the MRD-2 value D4 from the image information of the eye 24 imaged by the infrared CCD 12. As shown in Fig. 8, the eye 24 includes a pupil 22, an iris 25, an upper eyelid 26, and a lower eyelid 23. From this is acquired the MRD-2 value D4, which is the first distance between the pupil 22 of the eye 24 imaged by the infrared CCD 12 and the lower eyelid 23. Also, the storage unit 17 stores, in a table, projection distances D1 (see Fig. 5) of the virtual image 60 in associated with MRD-2 values D4. Therefore, when the gaze distance D2 of the user 40 is changed, the control unit 11 can change the projection distance D1 of the virtual image 60 in a short time based on the table of the MRD-2 values D4 and the projection distances D1 of the virtual image 60. The storage unit 17 includes any computer storage device or any non-transitory computer-readable medium with the sole exception of a transitory, propagating signal. For example, the storage unit 17 includes a nonvolatile memory and a volatile memory. A non-volatile memory includes, for example, at least one of a read-only memory (ROM), an erasable programmable read-only memory (EPROM), an electrically erasable programmable read-only memory (EEPROM), and a flash memory. A volatile memory includes, for example, a random access memory (RAM).

The MRD-2 value D4 will be described with reference to Fig. 8. The MRD-2 value D4 is the distance between the center 22a of the pupil 22 and the lower eyelid. That is, when the pupil 22 is at the center 22a, the MRD-2 value D4 is obtained by drawing a straight line vertically downward from the center 22a of the pupil 22 to the lower eyelid 23, and finding the distance from the center 22a of the pupil 22 to a point 23a on the edge of the lower eyelid 23. Also, if the position of the pupil 22 is shifted to the right or the left, a straight line is drawn vertically downward from the center 22a of the pupil 22, and a straight line is drawn horizontally from the edge of the lower eyelid 23 when the pupil 22 is at the center 22a. The intersection point of the straight line extending vertically downward from the center 22a of the pupil 22 and the horizontal straight line is connected. If the position of the pupil 22 is shifted to the right or the left, the distance from this intersection point to the center 22a of the pupil 22 corresponds to the MRD-2 value D4. This MRD-2 value D4 varies little from one individual to the next. Also, the MRD-2 value D4 averages about 5 mm when the user 40 is looking straight ahead. Consequently, the position where the MRD-2 value D4 is 5 mm is the horizontal line of sight of 0°. Fig. 9 shows the MRD-2 value D4 along with the vertical gaze angle (viewing angle) of the eye 24. It can be seen in Fig. 9 that the MRD-2 value D4 increases as the line of sight rises, and the MRD-2 value D4 decreases as the line of sight falls.

The storage unit 17 also stores, as a table, brightness setting values for the virtual image 60 that will be easy for the user 40 to see, in association with pupil diameters. Therefore, the control unit 11 can change the brightness of the virtual image 60 based on a change in the ambient brightness.

### (Adjustment of Projection Distance)

The control unit 11 controls the projection distance adjustment unit 15 so that the projection distance D1 corresponds to the acquired MRD-2 value D4. The projection distance adjustment unit 15 is configured to increase the projection distance D1 of the virtual image 60 as the MRD-2 value D4 increases.

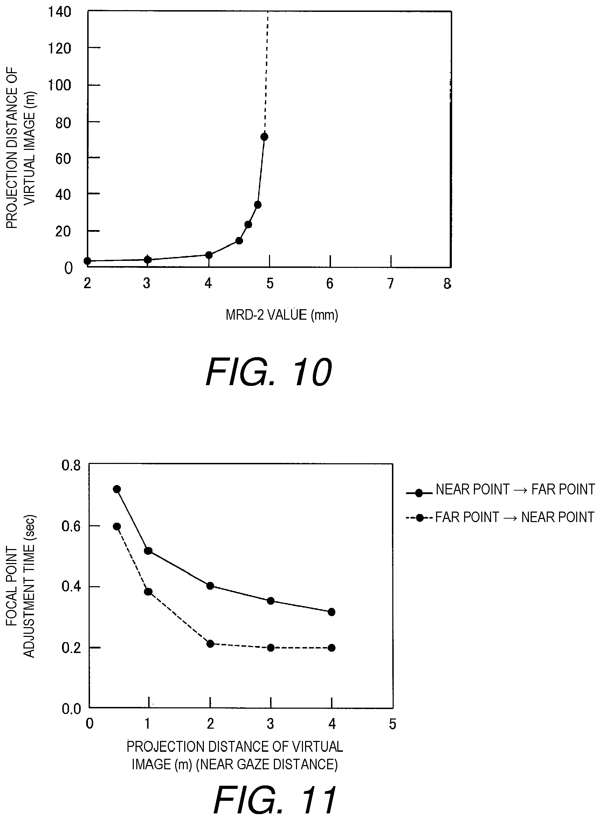

The control unit 11 is configured to acquire the gaze distance D2, which is the distance from the eye 24 to the object seen by the user 40, based on the MRD-2 value D4, and to adjust the projection distance D1 so that the gaze distance D2 and the projection distance D1 substantially coincide. As shown in Fig. 10, the control unit 11 is configured such that when the MRD-2 value D4 is smaller than a specific distance, the projection distance D1 will be adjusted so that the gaze distance D2 substantially coincides with the projection distance D1, and when the MRD-2 value D4 is close to the specific distance (e.g., when the MRD-2 value D4 is greater than the specific distance), the projection distance D1 is adjusted to infinity. Also, the control unit 11 increases the projection distance D1 according to the MRD-2 value D4 until the MRD-2 value D4 exceeds 5 mm. The control unit 11 is configured such that when the MRD-2 value D4 exceeds 5 mm, the projection distance D1 is adjusted to infinity based on the MRD-2 value D4. Here, the phrase "the projection distance D1 is adjusted to infinity" refers to that the virtual image 60 is focused with an acceptable sharpness at a farthest point of an adjustable range, for example. In the illustrated embodiment, the gaze distance D2 does not need to be acquired or calculated for adjusting the projection distance D1 since the storage unit 17 stores, in the table, the projection distances D1 in associated with the MRD-2 values D4. However, if needed, the gaze distance D2 can be acquired or calculated as a horizontal distance from the eye 24 of the user 40 to an intersection between the ground and the line of sight of the user 40. Here, the line of sight of the user 40 is estimated based on the MRD-2 value D4 using the relation between MRD-2 values D4 and vertical gaze angles (viewing angles) of the eye 24 shown in Fig. 9.

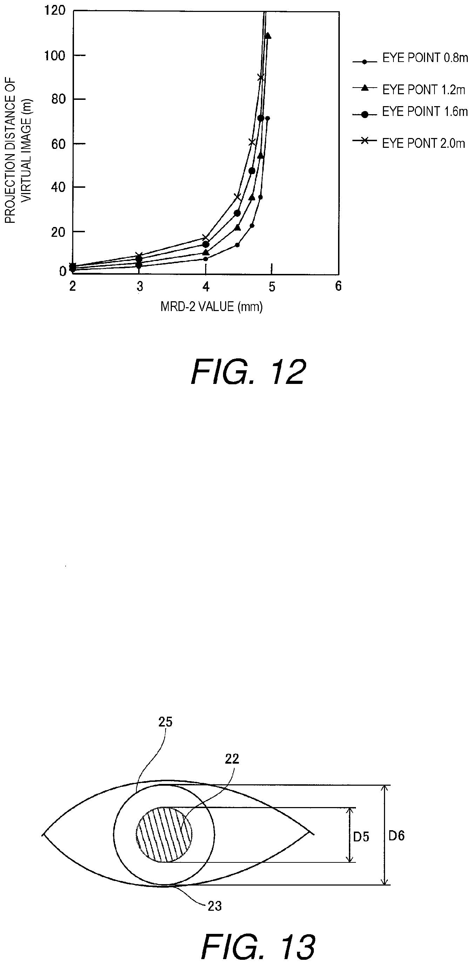

Fig. 12 shows the focal point adjustment time required to adjust the gaze distance D2 when the background distance is offset with respect to the projection distance D1 of the virtual image 60. It can be seen in Fig. 11 that when the gaze distance D2 is changed from a near point to a far point, or from a far point to a near point, it takes time to adjust the focal point. However, almost no focal point adjustment time is required by a change from one far point to another far point, or a change from one near point to another near point. Therefore, if the gaze distance D2 is matched to the projection distance D1 of the virtual image 60, focal point adjustment will not take any time.

The positional relation between the gaze distance D2 of the user 40 and the virtual image 60 depends greatly on what kind of mobile object the user 40 is operating, and on the eye point D3 of that individual user (see Fig. 5). The eye point D3 is the distance from the ground to the height of the eye 24 of the user 40 operating the mobile body.

Fig. 12 shows the projection distance D1 of the virtual image 60 based on the change in the MRD-2 value D4 due to a change in the eye point D3. For a given MRD-2 value D4, the projection distance D1 of the virtual image 60 becomes farther away as the value of the eye point D3 increases. Also, as mentioned above, the eye point D3 varies depending on the size of the mobile body and the individual. Therefore, the initial setting of the eye point D3 can be made from a portable terminal or the like via the communication unit 13 (see Fig. 1) of the HMD device 100. Consequently, if the user 40 sets the eye point D3 to 1.2 m in advance, the projection distance D1 of the virtual image 60 is set to 20 m when the MRD-2 value D4 is 4.5 mm.

### (Brightness Adjustment)

The control unit 11 uses edge detection to acquire the size D5 of the pupil 22 and the size D6 of the iris 25 (see Fig. 13). The size of the iris 25 can be considered to be a constant value because there is almost no individual difference, and serves as a reference when finding the actual size of the pupil 22 from an image of the eye 24. Therefore, regardless of the magnification of the image of the eye 24, the actual size (mm) of the pupil diameter can be acquired from the ratio between the size D5 (pixels) of the pupil 22 and the size D6 (pixels) of the iris 25.

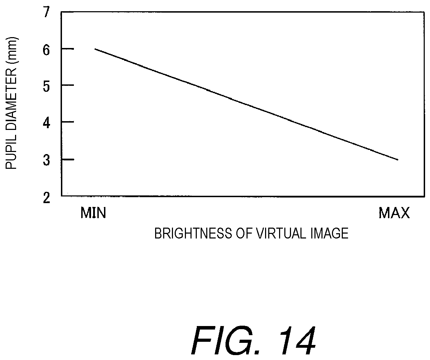

The control unit 11 is configured to perform control to adjust the display brightness of the display unit 14 based on both the size D5 of the pupil 22 and the size D6 of the iris 25 (see Fig. 13) captured by the infrared CCD 12. The size D5 of the pupil 22 changes with the ambient brightness, but the size D6 of the iris 25 does not change with the ambient brightness. Therefore, the control unit 11 can estimate the background brightness from the pupil diameter of the user 40. Accordingly, the control unit 11 varies the brightness of the virtual image 60 based on the table stored in the storage unit 17, which is illustrated as a graph in Fig. 14 showing the relation between pupil diameter and the brightness setting value for the virtual image 60 (or background brightness). Therefore, since the brightness of the virtual image 60 can be suitably selected with respect to the ambient brightness, the virtual image 60 can be kept from looking too dark or too bright to be seen clearly. In particular, the control unit 11 adjusts the display brightness of the display unit 14 to achieve the brightness setting value for the virtual image 60 determined based on the pupil diameter of the user 40 determined based on the image of the eye 24 imaged by the infrared CCD 12 and the table stored in the storage unit 17.

### (Display Method for Head-Mounted Display)

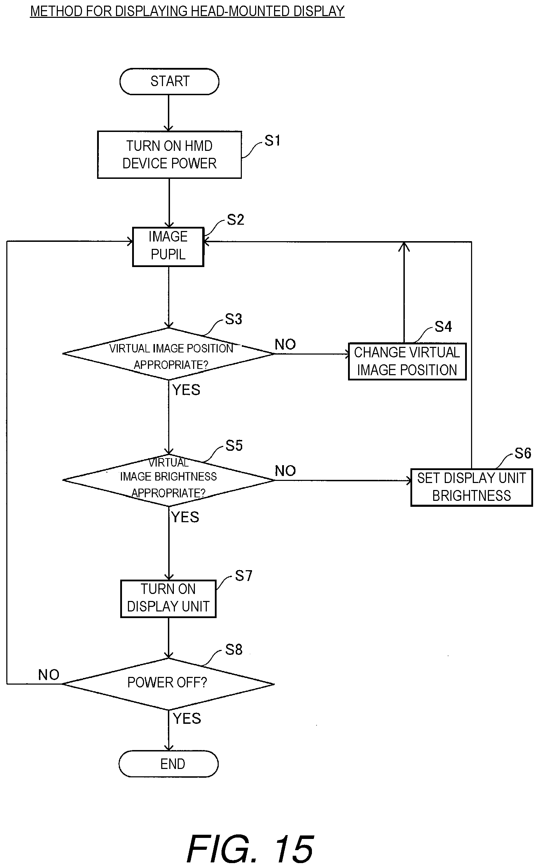

Next, the processing to display the virtual image 60 executed by the control unit 11 of the head-mounted display will be described with reference to Fig. 15.

In step S1, the user 40 turns on the power to the head-mounted display (the HMD device 100).

In step S2, the infrared CCD 12 starts imaging the pupil 22.

In step S3, the control unit 11 determines whether or not the projection distance D1 of the virtual image 60 in Fig. 10 is appropriate from the information about the pupil 22 imaged in step S2. Whether or not this is appropriate is determined by whether or not the projection distance D1 acquired from the MRD-2 value D4 substantially coincides with the current projection distance D1 (lens driving amount), based on the data shown in Fig. 10.

In step S3, if the control unit 11 determines that the projection distance D1 of the virtual image 60 is not appropriate, in step S4 the control unit 11 controls the projection distance adjustment unit 15 to change the projection distance D1 of the virtual image 60. After this, the processing goes back to step S2, the eye 24 is imaged again, and the processing returns to step S3.

In step S3, if the control unit 11 determines that the projection distance D1 of the virtual image 60 is appropriate, the processing proceeds to step S5.

In step S5, the control unit 11 determines whether or not the brightness of the display unit 14 is appropriate from the information about the pupil 22 of the eye 24 imaged in step S2. Whether or not this is appropriate is determined by whether or not the brightness value corresponding to the pupil diameter in Fig. 14 coincides with the current brightness value.

When the control unit 11 determines in step S5 that the virtual image brightness is not appropriate, the control unit 11 changes the brightness setting of the display unit 14 in step S6. After this, the processing returns to step S2 to capture an image of the eye 24 again, then returns to step S3, and processing up to step S5 is repeated.

If the control unit 11 determines in step S5 that the brightness of the display unit 14 is appropriate, the processing proceeds to step S7.

In step S7, the control unit 11 turns on the display unit 14.

When the power to the HMD device 100 is turned on in step S1, steps S2 to S8 are repeated as needed until the power is turned off in step S8. Also, in step S7, if the display unit 14 is already on, step S7 is skipped. Consequently, when the gaze distance D2 of the user 40 is changed, the virtual image 60 can be projected at the projection distance D1 corresponding to the gaze distance D2 of the user 40.

When the power is turned off in step S8, the power to the HMD device 100 is cut off.

### (Effect of This Embodiment)

The following effect can be obtained with this embodiment.

In this embodiment, as described above, the HMD device 100 includes the display unit 14 that displays an image, the HMD lens 16 that includes the lens 35 for projecting the virtual image 60 of the image so as to overlap part of the field of view of the user 40, the infrared CCD 12 that images the eye 24 of the user 40, and the projection distance adjustment unit 15 that adjusts the projection distance D1, which is the distance from the eye 24 to the virtual image 60 seen by the user 40, wherein the configuration is such that the MRD-2 value D4 between the pupil 22 and the lower eyelid 23 of the eye 24 imaged by the infrared CCD 12 is acquired, and the projection distance adjustment unit 15 is controlled so that the projection distance D1 corresponds to the acquired MRD-2 value D4. Consequently, the vertical position of the pupil 22 of the user 40 can be ascertained by acquiring the distance between the pupil 22 and the lower eyelid 23 of the user 40 from a captured image of the eye 24, so it can be estimated what the user 40 is looking at. Also, the control unit 11 adjusts the projection distance D1 of the virtual image 60 of the display image to the gaze distance D2, which is the distance to an object seen by the user 40. Consequently, the virtual image 60 of the display image is projected at the gaze distance D2 of the user 40. Accordingly, even if the gaze target of the user 40 is greatly changed, the position of the virtual image 60 of the display image will also be adjusted to the gaze distance D2 of the user 40 based on the change in the gaze target of the user 40. Therefore, it is possible to provide the HMD device 100 with which adjustment of the focal point of the user 40 takes less time when the gaze target of the user 40 is changed to the virtual image 60 of the display image.

In this embodiment, as described above, the control unit 11 is configured to control the projection distance adjustment unit 15 so that the projection distance D1 of the virtual image 60 increases as the MRD-2 value D4 increases. Consequently, when the MRD-2 value D4 of the user 40 is large, it can be estimated that the gaze distance D2 of the user 40 is far away, so if the projection distance D1 of the virtual image 60 of the display image is increased, then it will take less time to adjust the focal point of the user 40 even if the gaze target of the user 40 is changed to the virtual image 60 of the display image.

In this embodiment, as described above, the control unit 11 is configured to acquire the gaze distance D2, which is the distance from the eye 24 to an object seen by the user 40, based on the MRD-2 value D4, and to control the projection distance adjustment unit 15 so as to adjust the projection distance D1 so that the gaze distance D2 and the projection distance D1 substantially coincide. Consequently, acquiring the distance between the pupil 22 and the lower eyelid 23 of the user 40 tells us the position of the pupil 22 of the user 40, which makes it possible to estimate what the user 40 is looking at. As a result, the control unit 11 acquires the gaze distance D2 of the user 40, which is the distance from the eye 24 of the user 40 to an object seen by the user 40, adjusts the projection distance D1 of the projection distance adjustment unit 15, and performs control to make the gaze distance D2 of the user 40 substantially coincide with the projection distance D1 of the virtual image 60. Therefore, since the gaze distance D2 of the user 40 substantially coincides with the projection distance D1 of the virtual image 60 of the display image, there is no need to adjust the focal point of the user 40, so the time it would otherwise take for the user to adjust the focal point can be eliminated.

In this embodiment, as described above, the control unit 11 is configured to control the projection distance adjustment unit 15 so as to adjust the projection distance D1 so that the gaze distance D2 substantially coincides with the projection distance D1 when the MRD-2 value D4 is less than a specific distance, and is configured to control the projection distance adjustment unit 15 so as to adjust the projection distance D1 to infinity, or to fix the projection distance D1 at a specific upper limit distance, when the MRD-2 value D4 is greater than a specific distance. Consequently, when the gaze distance D2 of the user 40 is less than the specific distance, the projection distance D1 is changed so that the position of the virtual image 60 substantially coincides with the gaze distance D2 of the user 40. Therefore, by matching the position of the virtual image 60 of the display image to the gaze distance D2 of the user 40 up to a specific distance, even if the gaze target of the user 40 is changed to the projected virtual image 60 of the display image, the time it would otherwise take to adjust the focal point of the user 40 can be eliminated. Also, when the MRD-2 value D4 is greater than the specific distance, regardless of the gaze distance D2, the projection distance D1 is adjusted to infinity or to the upper limit distance. Thus, it will take less time to adjust the focal point of the user 40 with respect to the virtual image 60 of the display image.

In this embodiment, as described above, the display unit 14 is configured to display the navigation information image 63 including information about the movement route of the mobile body accompanying movement by the mobile body. Consequently, when the user 40 puts on the HMD device 100 and is operating an automobile or motorcycle, it will take less time to adjust the focal point of the user 40 with respect to the navigation information image 63 projected at the gaze distance D2 of the user 40.

In this embodiment, as described above, the control unit 11 is configured to perform control to adjust the display brightness of the display unit 14 based on both the size D5 of the pupil 22 and the size D6 of the iris 25 imaged by the infrared CCD 12. Consequently, it is possible to estimate the ambient brightness, which is the brightness of the surrounding area perceived by the user 40, from the size D5 of the pupil 22. Therefore, when the ambient brightness changes, the brightness of the virtual image 60 projected at the gaze distance D2 of the user 40 can be adjusted, so the user 40 can view the virtual image 60 projected at the gaze distance D2 of the user 40 at a brightness that is easy to see.

In this embodiment, as described above, the projection distance adjustment unit 15 is configured to adjust the projection distance D1 of the virtual image 60 by moving the display unit 14 or the lens 35. Consequently, the projection distance adjustment unit 15 can perform control to make the projection distance D1 of the virtual image 60 substantially coincide with the gaze distance D2 of the user 40 by moving the display unit 14 or the lens 35. Therefore, when the gaze target of the user 40 is changed to the virtual image 60 of the display image, it will take less time to adjust the focal point of the user 40.

As discussed above, the display method for a head-mounted display of this embodiment is provided with a step of displaying an image with the display unit 14, a step of projecting the image with the HMD lens 16 so as to partially overlap the field of view of the user 40, and a step of imaging the eye 24 of the user 40 to acquire the distance between the pupil 22 and the lower eyelid 23, and adjusting the projection distance D1 so that the projection distance D1 corresponds to the acquired distance. Consequently, when the gaze target of the user 40 is changed to the virtual image 60 of the display image, it will take less time to adjust the focal point of the user 40.

### (Modification Example)

The embodiment disclosed herein is just an example in every respect, and should not be interpreted as being limiting in nature. The scope of the present invention is defined by not the above embodiments but the appended claims.

In the above embodiment, an example is given in which the HMD device 100 uses a drive means for moving the lens 35, but the present invention is not limited to this. In the present invention, as shown in Fig. 4, a projection distance adjustment unit 15a may be used to move the display unit 14 as the object to be moved. Here, the projection distance adjustment unit 15a can include the same configurations as the projection distance adjustment unit 15 shown in Fig. 6.

In the above embodiment, an example is given in which the HMD device 100 uses the stepping motor 36 as a drive means for moving the lens 35, but the present invention is not limited to this. In the present invention, something other than the stepping motor 36 may be used as the drive means for moving the lens 35. For example, a piezoelectric element, a magnet, or the like may be used for this drive.

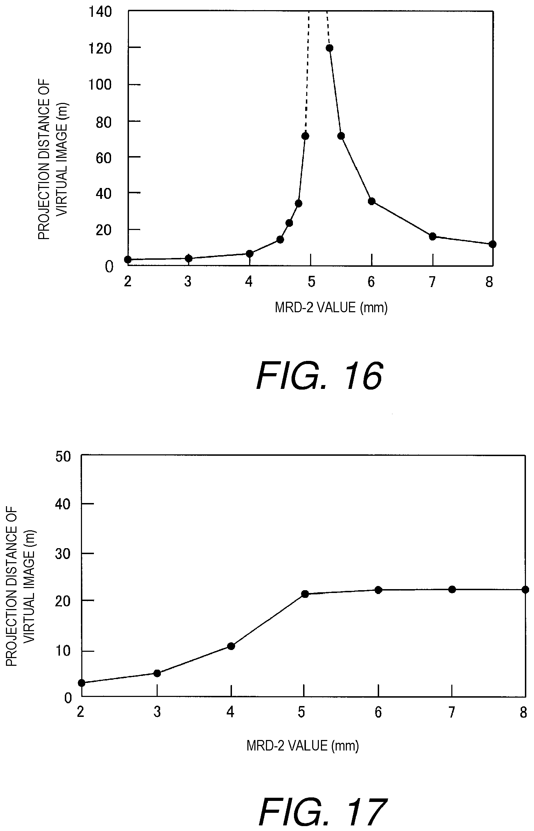

In the above embodiment, an example is given in which the HMD device 100 adjusts the projection distance D1 to infinity when the MRD-2 value D4 is greater than the specific distance, but the present invention is not limited to this. In the present invention, as shown in Fig. 16, when the MRD-2 value D4 is greater than the specific distance, it may be assumed that the user 40 is looking at something that is nearby but high up, and the projection distance D1 may be shortened. Thus, the control unit 11 controls the projection distance adjustment unit 15 so as to increase the projection distance D1 of the virtual image 60 as the MRD-2 value D4 increases when the MRD-2 value D4 is smaller than the specific distance. The control unit 11 also controls the projection distance adjustment unit 15 so as to decrease the projection distance D1 of the virtual image 60 as the MRD-2 value D4 increases when the MRD-2 value D4 is greater than the specific distance.

In the above embodiment, an example is given in which the HMD device 100 adjusts the projection distance D1 to infinity when the MRD-2 value D4 is greater than the specific distance, but the present invention is not limited to this. In the present invention, as shown in Fig. 17, the projection distance D1 may be fixed at a specific upper limit distance. Thus, the control unit 11 controls the projection distance adjustment unit 15 so as to increase the projection distance D1 of the virtual image 60 as the MRD-2 value D4 increases when the MRD-2 value D4 is smaller than the specific distance. The control unit 11 also controls the projection distance adjustment unit 15 so as to maintain the projection distance D1 of the virtual image 60 at the specific upper limit distance when the MRD-2 value D4 is greater than the specific distance.

In the above embodiment, an example is given in which the HMD device 100 is installed near the right eye, but the present invention is not limited to this. In the present invention, the HMD device 100 may instead be installed near the left eye.

In the above embodiment, an example is given in which the HMD device 100 displays the virtual image 60 at the upper right, but the present invention is not limited to this. In the present invention, the virtual image 60 may instead be displayed at some other position, such as at the lower right.

In the above embodiment, an example of the HMD device 100 is given in which the MRD-2 value D4 is the distance from the center 22a of the pupil 22 to the lower eyelid 23, but the present invention is not limited to this. In the present invention, the MRD-2 value D4 may instead be the distance from the lower part of the pupil 22 to the lower eyelid 23.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a user wearing a helmet with an HMD device in an upright position on a horizontal surface. Accordingly, these directional terms, as utilized to describe the HMD device should be interpreted relative to a user wearing a helmet with an HMD device on a horizontal surface. The terms "left" and "right" are used to indicate the "right" when referencing from the right side as viewed from the rear side of the user, and the "left" when referencing from the left side as viewed from the rear side of the user.

The phrase "at least one of" as used in this disclosure means "one or more" of a desired choice. For one example, the phrase "at least one of" as used in this disclosure means "only one single choice" or "both of two choices" if the number of its choices is two. For another example, the phrase "at least one of" as used in this disclosure means "only one single choice" or "any combination of equal to or more than two choices" if the number of its choices is equal to or more than three. Also, the term "and/or" as used in this disclosure means "either one or both of".

The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

## Claims

1. A head-mounted display device comprising:
a display unit configured to display an image;
a projection unit including a lens that is configured to project a virtual image of the image so as to overlap part of a field of view of a user of the head-mounted display device;
an imaging unit configured to image an eye of the user;
a projection distance adjustment unit configured to adjust a projection distance of the virtual image, which is a distance from the eye to the virtual image seen by the user; and
a control unit configured to acquire a first distance between a pupil and a lower eyelid of the eye imaged by the imaging unit, and configured to control the projection distance adjustment unit such that the projection distance of the virtual image corresponds to the first distance.

2. The head-mounted display device according to claim 1, wherein
the control unit is configured to control the projection distance adjustment unit so as to increase the projection distance of the virtual image as the first distance increases.

3. The head-mounted display device according to claim 1 or 2, wherein
the control unit is configured to control the projection distance adjustment unit so as to adjust the projection distance of the virtual image to substantially coincide with a second distance, which is a distance from the eye to an object seen by the user and is estimated based on the first distance.

4. The head-mounted display device according to claim 3, wherein
the control unit is
configured to control the projection distance adjustment unit so as to adjust the projection distance of the virtual image to substantially coincide with the second distance when the first distance is less than a specific distance, and
configured to control the projection distance adjustment unit so as to adjust the projection distance of the virtual image to infinity, or to fix the projection distance of the virtual image at a specific upper limit distance, when the first distance is greater than the specific distance.

5. The head-mounted display device according to any one of claims 1 to 4,
wherein
the display unit is configured to display a navigation information image including information about a movement route of a mobile body accompanying movement by the mobile body.

6. The head-mounted display device according to any one of claims 1 to 5,
wherein
the control unit is configured to perform control to adjust a display brightness of the display unit based on both a size of the pupil and a size of an iris of the eye imaged by the imaging unit.

7. The head-mounted display device according to claim 6, further comprising
a storage unit configured to store a table in which brightness setting values for the virtual image are associated with pupil diameters.

8. The head-mounted display device according to claim 7, wherein
the control unit is configured to acquire a pupil diameter of the eye based on a ratio between the size of the pupil and the size of the iris of the eye imaged by the imaging unit.

9. The head-mounted display device according to claim 8, wherein
the control unit is configured to adjust the display brightness of the display unit based on a brightness setting value for the virtual image determined based on the pupil diameter of the eye and the table stored by the storage unit.

10. The head-mounted display device according to any one of claims 1 to 9,
wherein
the projection distance adjustment unit is configured to adjust the projection distance of the virtual image by moving the display unit or the lens.

11. The head-mounted display device according to claim 10, wherein
the projection distance adjustment unit includes an electronic actuator to move the display unit or the lens along an optical axis of the display unit or the lens.

12. The head-mounted display device according to claims 10 or 11, wherein the control unit is configured to control the projection distance adjustment unit to move the display unit or the lens by a drive amount determined based on a relation between drive amounts of the display unit or the lens and projection distances of the virtual image.

13. The head-mounted display device according to any one of claims 1 to 12, further comprising
a housing in which the display unit, the projection unit, the imaging unit, the projection distance adjustment unit and the control unit are at least partially housed.

14. The head-mounted display device according to claim 13, wherein
the housing is attachable to a helmet for the user.

15. A display method for any one of the head-mounted display devices according to claims 1 to 14, the display method comprising:
displaying an image on a display unit;
projecting a virtual image of the image from a projection unit so as to overlap part of a field of view of the user of the head-mounted display device;
acquiring a first distance between a pupil and a lower eyelid of an eye of the user by imaging the eye of the user; and
adjusting a projection distance so as to correspond to the first distance.
